# EUROPÄISCHE PATENTSCHRIFT

(11) **EP 2 117 930 B1**
(45) Veröffentlichungstag und Bekanntmachung des Hinweises auf die Patenterteilung: **02.11.2011**
(21) Anmeldenummer: 08701025.2
(22) Anmeldetag: 09.01.2008
(51) Int. Cl.: B64D 11/06

(54) **SITZVORRICHTUNG**
SEAT DEVICE
DISPOSITIF POUR SIÈGE

(30) Priorität: 13.01.2007 DE 102007001962
(43) Veröffentlichungstag der Anmeldung: 18.11.2009
(73) Patentinhaber: Recaro Aircraft Seating GmbH & Co. KG, 74523 Schwäbisch Hall (DE)
(72) Erfinder: SPEH, Andreas, 88444 Ummendorf (DE); BAUMANN, Jürgen, 78531 Bodman-Ludwigshafen (DE); SCHWEIZER, Oliver, 88161 Lindenberg (DE)
(74) Vertreter: Daub, Thomas
(86) Internationale Anmeldenummer: PCT/EP2008/000088
(87) Internationale Veröffentlichungsnummer: WO 2008/083952

(56) Entgegenhaltungen:
- DE-A1- 3 044 089
- DE-A1-102005 009 419
- JP-A- 11 059 249
- US-A- 4 431 231

## Beschreibung

### Stand der Technik

Die Erfindung geht aus von einer Sitzvorrichtung nach dem Oberbegriff des Anspruchs 1.

Aus der JP 11 059249 A ist ein Flugzeugsitz mit einer Rückenlehneneinheit und einer Tischlagereinheit bekannt, die zur Durchführung einer Schwenkbewegung jeweils ein Koppelgetriebe mit Schwenkachsen umfassen, wobei das Koppelgetriebe der Rückenlehneneinheit und das Koppelgetriebe der Tischlagereinheit unterschiedliche Schwenkachsen aufweisen, wodurch eine Schwenkstellung der Tischlagereinheit von einer Änderung einer Schwenklage der Rückenlehneneinheit unbeeinflusst bleibt.

Die DE 30 44 089 A1 offenbart einen Fahrzeugsitz mit einer Rückenlehneneinheit, die durch ein als Parallelogrammlenker ausgebildetes Koppelgetriebe neigungsverstellbar ist, und einem rückwärtig an dem Fahrzeugsitz angeordneten Klapptisch, wobei eine Lagerachse des Klapptischs und eine Schwenkachse des Parallelogrammlenkers koaxial angeordnet sind. Dadurch, dass die Lagerachse des Klapptischs fest mit einer Seite des Parallelogrammlenkers verbunden ist, kann ein Winkel zwischen der Seite des Parallelogrammlenkers und dem Klapptisch konstant gehalten werden, so dass eine horizontale Gebrauchslage des Klapptischs auch bei einer Bewegung der Rückenlehneneinheit beibehalten werden kann. Nachteilig an dieser Lösung ist, dass sich für einen rückwärtig angeordneten Benutzer des Klapptischs sowohl die Höhe des Klapptischs als auch ein Abstand zum Benutzer verändern, wenn die Neigung der Rückenlehneneinheit des Fahrzeugsitzes geändert wird.

Die US 4 431 231 A offenbart einen Flugzeugsitz mit einer um eine horizontale Achse schwenkbaren Rückenlehne und einer Tischeinheit, die an zwei Armen angelenkt ist, die ebenfalls um die horizontale Achse schwenkbar sind. Die Tischeinheit umfasst ein Koppelgetriebe, das bei einer Bewegung der Tischeinheit von einer Verstauposition zu einer Benutzungsposition ein Blockiermittel betätigt, durch das ein Schwenkbereich der Rückenlehne begrenzt wird, so dass einem Benutzer des Flugzeugsitzes nur ein eingeschränkter Schwenkbereich zur Verfügung steht.

Der Erfindung liegt die Aufgabe zugrunde, eine konstruktiv vereinfachte Sitzvorrichtung bereitzustellen, die voneinander unabhängige Bewegungen einer Rückenlehneneinheit und einer Tischlagereinheit ermöglicht.

Diese Aufgabe ist durch eine Sitzvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Sitzvorrichtung, insbesondere einer Kraftfahrzeug- oder Flugzeugsitzvorrichtung, mit einer Rückenlehneneinheit, die wenigstens ein Koppelgetriebe umfasst, und mit einer Tischlagereinheit, die wenigstens ein Koppelgetriebe umfasst.

Es wird vorgeschlagen, dass die Rückenlehneneinheit und die Tischlagereinheit wenigstens zwei übereinstimmende Schwenkachsen aufweisen. Dabei soll unter einem "Koppelgetriebe" insbesondere ein Getriebe verstanden werden, bei dem zumindest zwei bewegliche Elemente über eine Koppel verbunden sind. Mittels einer entsprechenden Ausgestaltung können die Bewegungsbahnen der Rückenlehneneinheit und der Tischlagereinheit vorteilhaft aufeinander abgestimmt und insbesondere konstruktiv einfach zumindest teilweise und vorzugsweise zum Großteil überdeckend ausgeführt werden.

Ist wenigstens ein Korrespondenzpunkt der Tischlagereinheit auf einer Bewegungsbahn geführt, die zumindest teilweise mit einer Bewegungsbahn eines Korrespondenzpunkts der Rückenlehneneinheit übereinstimmt, kann vorteilhaft erreicht werden, dass ein an der Tischlagereinheit gelagerter Tisch in einer ausgeschwenkten Stellung stets komfortabel in eine vorteilhafte Stellung an die Rückenlehneneinheit zurückgeführt werden kann, und zwar insbesondere, wenn zumindest ein Großteil der Bewegungsbahnen der Korrespondenzpunkte übereinstimmt. Vorzugsweise weist die Tischlagereinheit einen größeren Bewegungsbereich, insbesondere einen größeren Schwenkbereich als die Rückenlehneneinheit der Sitzvorrichtung auf, wodurch sichergestellt werden kann, dass ein an der Tischlagereinheit gelagerter Tisch stets mit einer Rückenlehne der Rückenlehneneinheit mitgeführt werden kann und dennoch stets von der Rückenlehne weggeschwenkt werden kann.

In einer weiteren Ausgestaltung der Erfindung wird vorgeschlagen, dass die Sitzvorrichtung eine Gleitlagereinheit umfasst, über die die Tischlagereinheit in ihrer Bewegung geführt ist, wodurch eine erhöhte Stabilität erreicht werden kann.

Konstruktiv einfach kann die Führung dabei erreicht werden, wenn die Tischlagereinheit über die Gleitlagereinheit mit der Rückenlehneneinheit der Sitzvorrichtung gekoppelt ist.

Die erfindungsgemäße Sitzvorrichtung eignet sich aufgrund der möglichen Gewichtsreduzierung insbesondere für einen Flugzeugsitz, grundsätzlich ist eine entsprechende Sitzvorrichtung jedoch auch bei anderen, dem Fachmann als geeignet erscheinenden Sitzen einsetzbar, wie insbesondere bei Kraftfahrzeugsitzen, Sitzen für Hörsäle usw.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: einen schematisch dargestellten Flugzeugsitz mit einer erfindungsgemäßen Sitzvorrichtung in einer Seitenansicht in einer ersten Stellung und
- Fig. 2: der Flugzeugsitz aus Figur 1 in einer zweiten Stellung.

### Beschreibung des Ausführungsbeispiels

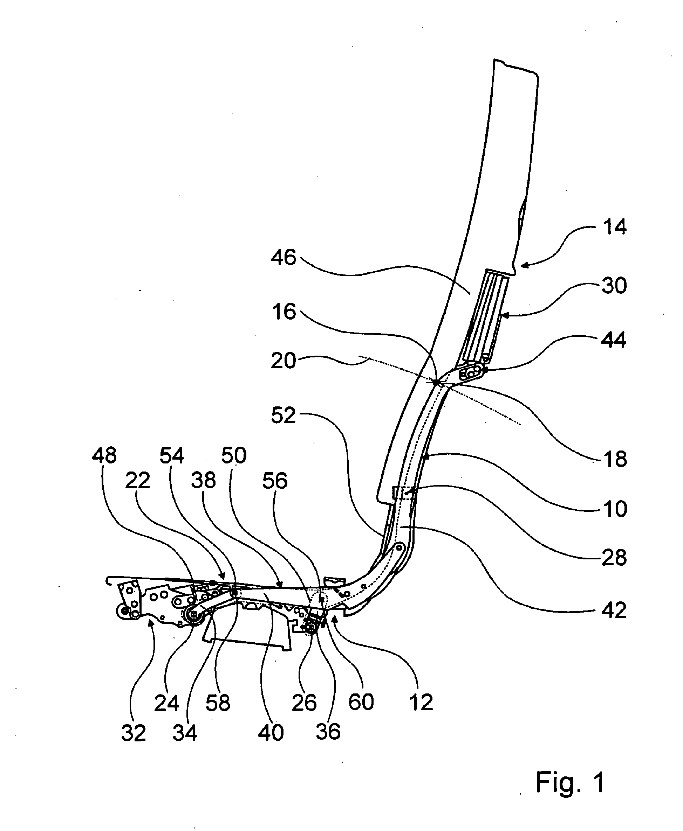

Figur 1 zeigt einen Flugzeugsitz mit einer erfindungsgemäßen Setzvorrichtung in einer Seitenansicht in einer ersten Stellung. Die Sitzvorrichtung umfasst eine Pückenleineneinheit 14 und eine Tischlagereinheit 10 mit einem daran gelagerten Tisch 30.

Die Tischlagereinheit 10 weist ein Koppelgetriebe 12 auf. Das Koppelgetriebe 12 ist zu einer Mittelachse des Flugzeugsitzes im Wesentlichen symmetrisch ausgebildet und umfasst pro Sitzseite jeweils zwei an einer Sitzträgereinheit 32 schwenkbar gelagerte Hebel 34, 36. Die nachfolgende Beschreibung beschränkt sich auf die dargestellte Sitzseite, wobei die nicht dargestellte Sitzseite der dargestellten Sitzseite im Wesentlichen entspricht.

Die Hebel 34, 36 sind über eine Koppel 38 verbunden, die zwei fest miteinander verbundene Hauptteile 40, 42 umfasst und bogenförmig ausgebildet ist. Die Hebel 34, 36 sind jeweils über einen Lagerbolzen 54, 56 um jeweils eine Schwenkachse 58, 60 schwenkbar an der Koppel 38 angelenkt. An einem der Sitzträgereinheit 32 abgewandten Ende sind an der Koppel 38 Lagermittel 44 angeordnet, mittels denen der Tisch 30 schwenkbar und verschiebbar mit der Koppel 38 verbunden ist.

Die Rückenlehneneinheit 14 umfasst ein Koppelgetriebe 22. Die Tischlagereinheit 10 und die Rückenlehneneinheit 14 sind auf übereinstimmenden Bewegungsbahnen 20 geführt, wie dies beispielhaft an einem Korrespöndenzpunkt 16 der Tischlagereinheit 10 und einem Korrespondenzpunkt 18 der Rückenlehneneinheit 14 in Figur 1 dargestellt ist. In einer Konfiguration, in der die Tischlagereinheit 10 und die Rückenlehneneinheit 14, und zwar der Tisch 30 mit einer Rückenlehne 46 der Rückenlehneneinheit 14, mittels einer nicht näher dargestellten Verriegelungseinheit gekoppelt sind, werden die Rückenlehne 46 und die Koppel 38 der Tischlagereinheit 10 auf übereinstimmenden Bewegungsbahnen 20 bewegt bzw. wird der Tisch 30 auf einer mit der Rückenlehne 46 exakt übereinstimmender Bewegungsbahn mitgeführt.

Das Koppelgetriebe 22 der Rückenlehneneinheit 14 umfasst pro Sitzseite zwei an der Sitzträgereinheit 32 schwenkbar gelagerte Hebel 48, 50, wobei die Hebel 48, 50 auf der der Sitzträgereinheit 32 zugewandten Seite übereinstimmende Schwenkachsen 24, 26 mit den Hebeln 3.4, 36 aufweisen. Die Hebel 48, 5C sind über eine Koppel 52 verbunden und sind dabei jeweils über einen nicht näher dargestellten Lagerbolzen schwenkbar um Schwenkachsen an der Koppel 52 angelenkt, die in der Konfiguration, in der der Tisch 30 mittels der Verriegelungseinheit mit der Rückenlehne 46 gekoppelt ist, mit den Schwenkachsen 58, 60 übereinstimmen.

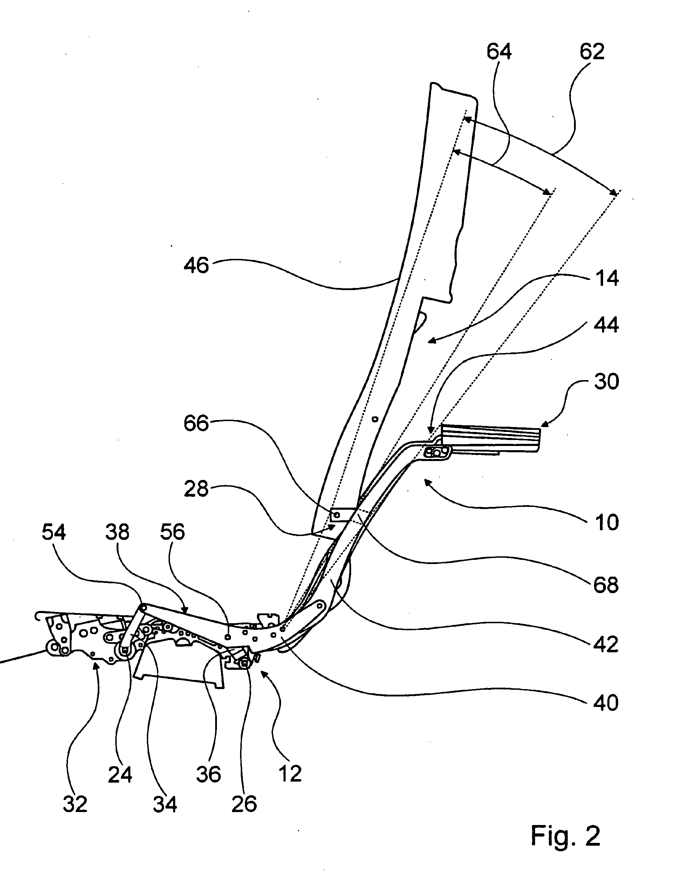

Wird der Tisch 30 entriegelt, können die Rückenlehne 46 und der Tisch 30 unabhängig voneinander bewegt werden, insbesondere kann der Tisch 30 mittels der Tischlagereinheit 10 von der Rückenlehne 46 weg geschwenkt und die Rückenlehne 46 kann im weg geschwenkten Zustand des Tisches 30 unabhängig vom Tisch 30 bewegt werden (Figur 2). Die Tischlagereinheit 10 weist einen Bewegungsbereich bzw. einen Schwenkbereich 62 auf, der größer ist als ein Bewegungsbereich bzw, ein Schwenkbereich 64 der Rückenlehneneinheit 14, so dass der Tisch 30 noch mittels der Tischlagereinheit 10 von der Rückenlehne 46 weg geschwenkt werden kann, wenn die Rückenlehne 46 weitestgehend aus einer im Wesentlichen aufrechten Stellung nach hinten geschwenkt ist. Im ausgeschwenkten Zustand (Figur 2) liegt die Tischlagereinheit 10 an einem nicht näher dargestellten Anschlag an. Aufgrund der übereinstimmenden Bewegungsbahnen 20 ist sichergestellt, dass in jeder Stellung der Rückenlehne 46 der Tisch 30 in eine vorbestimmte Stelle an der Rückenlehne 46 geschwenkt und dort verriegelt werden kann.

Die Rückenlehneneinheit 14 und die Tischlagereinheit 10 sind über eine Gleitlagereinheit 28 der Sitzvorrichtung gekoppelt, über die die Tischlagereinheit 10, und zwar insbesondere die Koppel 38, seitlich in ihrer Bewegung geführt ist. Die Gleitlagereinheit 28 weist seitlich an der Rückenlehne 46 ein erstes Gleitlagermittel 66 und an einer Innenseite der Koppel 38 ein zweites mit dem ersten Gleitlagermittel 66 korrespondierendes Gleitlagermittel 68 auf. Die Gleitlagereinheit 28 ist zur Mittelachse des Flugzeugsitzes symmetrisch ausgebildet und weist auf der nicht dargestellten Sitzseite entsprechende G-eitlagermittel auf.

### Bezugszeichen

- 10: Tischlagereinheit
- 12: Koppelgetriebe
- 14: Rückenlehneneinheit
- 16: Korrespondenzpunkt
- 18: Korrespondenzpunkt
- 20: Bewegungsbahn
- 22: Koppelgetriebe
- 24: Schwenkachse
- 26: Schwenkachse
- 28: Gleitlagereinheit
- 30: Tisch
- 32: Sitzträgereinheit
- 34: Hebel
- 36: Hebel
- 38: Koppel
- 40: Hauptteil
- 42: Hauptteil
- 44: Lagermittel
- 46: Rückenlehne
- 48: Hebel
- 50: Hebel
- 52: Koppel
- 54: Lagerbolzen

- 56: Lagerbolzen
- 58: Schwenkachse
- 60: Schwenkachse
- 62: Schwenkbereich
- 64: Schwenkbereich
- 66: Gleitlagermittel
- 68: Gleitlagermittel

## Patentansprüche

1. Sitzvorrichtung, insbesondere Kraftfahrzeug- oder Flugzeugsitzvorrichtung, mit einer Rückenlehneneinheit (14), die wenigstens ein Koppelgetriebe (22) umfasst, und mit einer Tischlagereinheit (10), die wenigstens ein Koppelgetriebe (12) umfasst,
**dadurch gekenntzeichnet,**
**dass** die Rückenlehneneinheit (14) und die Tischlagereinheit (10) wenigstens zwei übereinstimmende Schwenkachsen (24, 26) aufweisen.

2. Sitzvorrichtung nach Anspruch 1,
**dadurch gekennzeichnet,**
**dass** wenigstens ein Korrespondenzpunkt (16) der Tischlagereinheit (10) auf einer Bewegungsbahn (20) geführt ist, die zumindest teilweise mit einer Bewegungsbahn eines Korrespondenzpunkts (18) der Rückenlehneneinheit (14) übereinstimmt.

3. Sitzvorrichtung nach einem der vorhergehenden Ansprüche,
**dadurch gekennzeichnet,**
**dass** die Tischlagereinheit (10) einen größeren Bewegungsbereich aufweist als die Rückenlehneneinheit (14).

4. Sitzvorrichtung nach einem der vorhergehenden Ansprüche,
**gekennzeichnet durch**
eine Gleitlagereinheit (28), über die die Tischlagereinheit (10) in ihrer Bewegung geführt ist.

5. Sitzvorrichtung nach Anspruch 4,
**dadurch gekennzeichnet,**
**dass** die Tischlagereinheit (10) und die Rückenlehneneinheit (14) über die Gleitlagereinheit (28) gekoppelt sind.

6. Sitz, insbesondere Fahrzeug- oder Flugzeugsitz, mit einer Sitzvorrichtung nach einem der vorhergehenden Ansprüche.

## Claims

1. Seat device, in particular motor vehicle or aircraft seat device, with a backrest unit (14), which comprises at least one coupling transmission (22), and with a table bearing unit (10), which comprises at least one coupling transmission (12),
**characterized in that**
the backrest unit (14) and the table bearing unit (10) have at least two corresponding pivot axes (24, 26).

2. Seat device according to Claim 1,
**characterized in that**
at least one correspondence point (16) of the table bearing unit (10) is guided on a trajectory (20) which at least partially corresponds to a trajectory of a correspondence point (18) of the backrest unit (14).

3. Seat device according to one of the preceding claims,
**characterized in that**
the table bearing unit (10) has a greater range of movement than the backrest unit (14).

4. Seat device according to one of the preceding claims,
**characterized by**
a sliding bearing unit (28) via which the table bearing unit (10) is guided in its movement.

5. Seat device according to Claim 4,
**characterized in that**
the table bearing unit (10) and the backrest unit (14) are coupled via the sliding bearing unit (28).

6. Seat, in particular vehicle or aircraft seat, with a seat device according to one of the preceding claims.

## Revendications

1. Dispositif pour un siège, notamment dispositif pour un siège de véhicule automobile ou d'aéronef, avec une unité de dossier (14) comprenant au moins un entraînement d'accouplement (22) et avec une unité de palier de table (10) comprenant au moins un entraînement d'accouplement (12),
**caractérisé en ce que**
l'unité de dossier (14) et l'unité de palier de table (10) comportent au moins deux axes de pivotement (24, 26) coïncidant l'un avec l'autre.

2. Dispositif pour un siège selon la revendication 1,
**caractérisé en ce qu'**
au moins un point de correspondance (16) de l'unité de palier de table (10) est guidé sur une trajectoire de déplacement (20) coïncidant au moins en partie avec une trajectoire de déplacement d'un point de correspondance (18) de l'unité de dossier (14).

3. Dispositif pour un siège selon l'une des revendications précédentes,
**caractérisé en ce que**
l'unité de palier de table (10) présente une plus grande plage de déplacement que l'unité de dossier (14).

4. Dispositif pour un siège selon l'une des revendications précédentes,
**caractérisé par**
une unité de palier glissant (28) à l'aide de laquelle l'unité de palier de table (10) est guidée dans son déplacement.

5. Dispositif pour un siège selon la revendications 4,
**caractérisé en ce que**
l'unité de palier de table (10) et l'unité de dossier (14) sont couplées par le biais de l'unité de palier glissant (28).

6. Siège, notamment un siège de véhicule ou d'aéronef, avec un dispositif pour un siège selon l'une des revendications précédentes.
